# EUROPEAN PATENT SPECIFICATION

(11) **EP 3 883 177 B1**
(45) Date of publication and mention of the grant of the patent: **27.07.2022**
(21) Application number: 21168094.7
(22) Date of filing: 30.05.2017
(51) Int. Cl.: H04L 9/08, H04L 9/00

(54) **GENERAL DATA PROTECTION METHOD FOR MULTICENTRIC SENSITIVE DATA STORAGE AND SHARING**
VERFAHREN ZUM ALLGEMEINEDATEN SCHUTZ FÜR MULTIZENTRISCHE SPEICHERUNG EMPFINDLICHER DATEN UND GEMEINSAME NUTZUNG
PROCÉDÉ DE PROTECTION DE DONNÉES GÉNÉRALES POUR LE PARTAGE ET LA MÉMORISATION MULTICENTRIQUES DE DONNÉES SENSIBLES

(43) Date of publication of application: 22.09.2021
(62) Divisional of application: 17305622.7
(73) Proprietor: BE-Invest International SA, 8009 Strassen (LU)
(72) Inventor: CAREDDA Laurent, 63320 Ludesse (FR); SCHOEFFLER Benoit, 63000 Clermont-Ferrand (FR); MANSET David, 74370 Pringy (FR); KOSCINA BOBADILLA Mirko Zvonimir, 63100 Clermont-Ferrand (FR)
(74) Representative: Icosa

(56) References cited:
- CA-A1- 2 296 631
- US-A1- 2013 247 230
- US-B1- 7 499 551

## Description

### FIELD OF INVENTION

The present invention pertains to the field of pseudo-anonymized and encrypted sensitive data communication and processing. In particular, the invention relates to a method for handling data containing sensitive information which are subject to access restriction and/or processing restriction under privacy regulation.

### BACKGROUND OF INVENTION

Recent and fast progress in the field of information and communication technologies has brought society to deal with continuously expanding public social networks, private networks, and increasing volumes of sensitive information. This massive accumulation of information is leading toward the so-called "big data driven society", consequentially resulting in a paradigm shift. Sensitive data therefore are receiving more attention and are being regulated to ascend user's privacy to the fundamental rights of a person. Dedicated processing and storage systems are thus required, today, to enable appropriate usages of sensitive data, and which integrate the principles depicted in privacy regulations, such as "privacy-by-design". Said systems have to be designed in a user-centric manner in order to allow for multiple interactions' type. Users shall have total access to their personal data, and more importantly audit trails of the consented and legal processing of their personal data. This implies that the user has the right to modify/withdraw consent at any point in time; wherein all this information delimits the processing of the user personal data under the privacy regulation. At the same time, this transparency of processing towards the user has to be granted while ensuring the complete privacy, which may be accomplished thanks to pseudo-anonymization and encryption techniques.

US patent application US 2017/061559 discloses a system for handling data which are associated with contextual information allowing a processing of said data, compliant with a legal privacy obligation. However, the data integrates the system already in an anonymous form and are not encrypted afterwards, therefore in case of information leakage there is a higher re-identification risk for the concerned person(s).

Document US 7,499,551 discloses a public key infrastructure utilizing master public key encryption in addition to user's public key encryption in encrypting and decrypting session keys, so that an authorized third party can access the encrypted data when the user's private key is not accessible.

Also, US 2013/0247230 develops methods for trusted protocols in a non-secure distributed environment, in which secrets are concealed differently on respective computing resources, and secrets are communicated between such computing resources so as to enable the exploitation of keys, while each of the computing resources ignores at least one of the secrets.

C. Ma and J. Ao, "Proxy Key Re-encapsulation Mechanism for Group Communications", Report 2008/226, discloses a key encapsulation, proxy re-encapsulation and decapsulation method being performed respectively by a sending member of a group, a proxy server, and a receiving member of another group.

In spite of their respective advantages, those solutions do not prevent a substantial flow and storage of public keys in communication networks, which not only tends to increase the management complexity, notably in the frame of centralized controlling taking care of privacy regulations, but also leads to increased exposure to security flaws.

In this context, it is necessary to develop a system that ensures data processing abiding to privacy regulations, wherein the data are associated with the processing purpose. Once stored in a secured pseudo-anonymized and encrypted form, said data are accessible only if the purpose(s) of the access will respect the defined limit of processing.

### SUMMARY

The present invention relates to a computer-implemented method for the protection of sensitive data storage and/or sharing in a multicentric system and executed by a customer, compliant with claim 1.

In execution modes, that method is compliant with any of claims 2 to 8.

A related computer-implemented method comprises the steps of:
a) receiving a request from at least one customer in the multicentric system to share and/or to store sensitive data within at least one recipient in the multicentric system;
b) generating with an asymmetric encryption scheme a Master Key Pair;
c) providing to the at least one customer and the at least one recipient within the multicentric system a key generation service using the Master Key Pair of step b) as seed to generate a Key Pair, comprising a public key and a private key;
d) generating a Symmetric Master Key, with a symmetric encryption scheme, comprising a limit of processing for the sensitive data which are requested to be shared and/or stored by the at least one customer;
e) generating with the Symmetric Master Key and a symmetric encryption scheme a Derivation Master Key for each of the at least one customer and sending the related Derivation Master Key to each of the correspondent at least one customer;
f) receiving at least one encrypted Session Symmetric Key obtained from the Derivation Master Key of the at least one customer; wherein said at least one Session Symmetric Key is generated by the at least one customer and is encrypted using a homomorphic encryption scheme and the public key of said at least one customer;
g) transforming the at least one encrypted Session Symmetric Key; and
h) sending the transformed encrypted Session Symmetric Key to the at least one recipient.

According to one embodiment, the information defining a limit of processing for the sensitive data comprises at least one purpose of processing, stakeholders and the time storage limitation.

According to one embodiment, the related method further comprises the step of providing a symmetric encryption scheme to the at least one customer to be used with the public key, generated by said at least one customer in step c) of the related method, in order to encrypt the sensitive data required to be shared or stored within the at least one recipient by the at least one customer.

According to one embodiment, the related method further comprises the step of providing a homomorphic decryption scheme to the at least one recipient in order to decrypt the encrypted transformed Session Symmetric Key using the private keys, generated by the at least one recipient in step c) of the related method.

According to one embodiment, the related method further comprises the step of providing a symmetric encryption scheme to the at least one recipient in order to decrypt the encrypted sensitive data received with the use of the decrypted transformed Session Symmetric Key.

According to one embodiment, each of the keys generated are associated to an identification code.

According to one embodiment, the related computer-implemented method comprises a further step of receiving the encrypted sensitive data from the at least one customer and transmitting said encrypted sensitive data to the at least one recipient.

According to one embodiment, the encrypted sensitive data are transmitted with the identification code associated to the key to be used for the decryption of said encrypted sensitive data.

The present invention further relates to a system for protection of sensitive data storage and sharing in a multicentric system and implemented within a customer, the system comprising a data processing system comprising means for carrying out the steps of the method according to anyone of the execution modes of claims 1 to 8.

The present invention further relates to a computer program product for protection of sensitive data storage and sharing in a multicentric system, the computer program product comprising instructions which, when the program is executed by a computer, cause the computer to carry out the steps of the method according to anyone of the execution modes of claims 1 to 8.

The present invention further relates to a computer-readable storage medium comprising instructions which, when the program is executed by a computer, cause the computer to carry out the steps of the method according to anyone of the execution modes of claims 1 to 8.

Also, a data processing system comprises a storage medium and means for carrying out the steps of using an encryption scheme with the Master Key Pair, generated by step b) of the related computer-implemented method, to generate a Key Pair, comprising a public key and a private key, and storing in the storage medium the public key and the private key, receiving and storing in the storage medium the transformed encrypted Session Symmetric Key generated at step g) of the related computer implemented method and receiving and storing in the storage medium the encrypted sensitive data.

According to one embodiment, the storage medium comprises the public key, the private key, the transformed encrypted Session Symmetric Key and the encrypted sensitive data and wherein the data processing system further comprises the means for carrying out the steps of:
a) decrypting the encrypted transformed Session Symmetric Key with a homomorphic decryption scheme using the private keys stored in the memory storage;
b) decrypting the encrypted sensitive data using a symmetric encryption scheme with the decrypted transformed Session Symmetric Key;
c) processing the sensitive data;
d) encrypting the sensitive data with a predefined encryption scheme; and
e) storing the encrypted data into the storage medium.

### DEFINITIONS

In the present invention, the following terms have the following meanings:
- **"Controller":** refers to the natural or legal person, public authority, agency or other body which, alone or jointly with others, determines the purposes and means of the processing of personal data.
- **"Data subject":** refers to an identified or an identifiable natural person; wherein an identifiable person is one who can be identified, directly or indirectly, in particular by reference to an identifier such as a name, an identification number, location data, or more factors specific to physical, physiological, genetic, etc. of that natural person.
- **"Pseudo-anonymized sensitive data":** refers to personal data that had underwent a processing in such a manner that said personal data can no longer be attributed to a specific data subject without using additional information to ensure that the personal data are not attributed to an identified or an identifiable natural person, such as for example by replacing all identifying information in the personal data by an internal identifier stored separately from the personal data itself.
- **"Consent of the data subject":** refers to any freely given, specific, informed and unambiguous indication of the data subject's wishes by which he or she, by a statement or by a clear affirmative action, signifies agreement to the designated processing of personal data relating to him or her.
- **"Customer":** refers to a natural or legal person, public authority, agency or other body which processes personal data. Within the present invention the customer may also refer to any informatic means of the natural or legal person, public authority, agency or another body.
- **"Encrypted sensitive data":** refers to personal data that had underwent encryption into a cyphertext which can no longer be understood by anyone except authorized parties.
- **"Limit of processing":** refers to the ensemble of processing of personal data that are allowed under the privacy regulation.
- **"Processing":** refers to any operation or set of operations which is performed on personal data or on sets of personal data, whether or not by automated means, such as collection, recording, organization, structuring, storage, adaptation or alteration, retrieval, consultation, use, disclosure by transmission, dissemination or otherwise making available, alignment or combination, restriction, erasure or destruction.
- **"Purpose of processing":** refers to scope of the personal data processing.
- **"Privacy regulation":** refers to a regulation containing laws concerning data protection of subjects within a geographic region.
- **"Recipient":** refers to a natural or a legal person, public authority, agency or another body, to which the personal data are disclosed, whether a third party or not. Within the present invention the recipient may also refer to any informatic means of the natural or legal person, public authority, agency or another body.
- **"Stakeholders":** refers to a group comprising the different actors implied in the data processing such as a data subject, a controller, a recipient and a processor.
- **"Storage time limitation":** refers to maximum time during which the personal data can be stored according to the purposes for which the personal data are processed.

### DETAILED DESCRIPTION

This disclosure relates to a computer-implemented method for the protection of sensitive data storage and sharing in a multicentric system, executed by a customer in the multicentric system, wherein the multicentric system may comprise multiples parties sharing and processing sensitive data. By center it has to be understood any public authorities, (e.g. university hospital, public administration etc.), agencies (e.g. international organizations, intergovernmental organizations etc.), or any other parties (e.g. corporations, departments, associations etc.).

The present disclosure comprises a preliminary step of receiving a request from at least one customer in the multicentric system to share and/or to store sensitive data within at least one recipient in the multicentric system. By way of a non-limiting example, the sensitive data may be biometric data, genetic data, clinical data, care data, insurance data, judicial data, personal data revealing racial or ethnic origin, political opinions, religious or philosophical beliefs, or trade union membership, personal data revealing social difficulties, etc.

With an asymmetric encryption scheme, a Master Key Pair is generated. According to one embodiment, the algorithm implemented in the asymmetric encryption scheme is the ElGamal encryption algorithm or other homomorphic encryption scheme defined over an elliptic curve such as the Curve P-256 algorithm, the Curve P-384 algorithm and the Curve 25519 algorithm among others.

According to one embodiment, a key generation service using as seed the Master Key Pair is provided to the at least one customer and the at least one recipient within the multicentric system to generate a Key Pair, comprising a public key and a private key. According to one embodiment, the key generation service calculates the Key Pair by using the Curve 25519 algorithm. According to an alternative embodiment, the key generation service uses a Curve P-256 algorithm or a Curve P-384 algorithm for the Key Pair generation.

According to one embodiment, a Symmetric Master Key is generated, according to the key scheduling process of the encryption scheme used, comprising a limit of processing for the sensitive data which are requested to be shared and/or stored by the at least one customer. According to one embodiment, the information defining a limit of processing for the personal data comprises at least one purpose of processing, at least one stakeholders and the storage time limitation, not to be construed as being limited hereto. According to one embodiment, the information defining a limit of processing for the personal data further comprises consent to processing of the data subject and/or a list of recipients or categories of recipients that can access the data. According to one embodiment, the symmetric encryption scheme may implement a symmetric key block cipher with a block size of 128 bits and key sizes up to 256 bits as a Twofish algorithm, a symmetric key block cipher with a block size of 128 bits and supports a key size of 128, 192 or 256 bits such as the Serpent algorithm, a family of ciphers with different key and block sizes as the Advanced Encryption Standard algorithm (Rijndael) or Blowfish algorithm which is a 64-bit block size and a variable key length from 32 bits up to 448 bits, or other algorithms such as CAST5, Kuznyechik, RC4, 3DES, Skipjack or the International Data Encryption algorithm.

According to one embodiment, a Derivation Master Key is further generated with the Symmetric Master Key and a symmetric encryption scheme for each of the at least one customer and the related Derivation Master Key is sent to each of the correspondent at least one customer. According to one embodiment, the symmetric encryption scheme may implement a symmetric key block cipher with a block size of 128 bits and key sizes up to 256 bits as a Twofish algorithm, a symmetric key block cipher with a block size of 128 bits and supports a key size of 128, 192 or 256 bits such as the Serpent algorithm, a family of ciphers with different key and block sizes as the Advanced Encryption Standard algorithm (Rijndael) or Blowfish algorithm which is a 64-bit block size and a variable key length from 32 bits up to 448 bits, or other algorithms such as CAST5, Kuznyechik, RC4, 3DES, Skipjack or the International Data Encryption algorithm.

According to one embodiment, an encrypted Session Symmetric Key obtained from the Derivation Master Key of the at least one customer is received. Said Session Symmetric Key is unique for each specified limit of processing, recipient and type of sensitive data to encrypt. According to one embodiment, said Session Symmetric Key is generated by the at least one customer and is encrypted using a homomorphic encryption scheme and the public key of said at least one customer. The homomorphic encryption allows computations to be carried out on cipher data, thus generating an encrypted result which, when decrypted, matches the result of operations performed on the plain data. According to one embodiment the homomorphic encryption scheme is based on a partially homomorphic cryptosystem or on a fully homomorphic cryptosystem. By way of a non-limiting example, the homomorphic encryption scheme may use a cryptogram with two components E(mi) = (c₁,c₂), where ci is a value related to the decryption key such as the ElGamal algorithm. According to one embodiment, the homomorphic encryption scheme implements an Unpadded RSA algorithm.

According to one embodiment, the encrypted Session Symmetric Key is transformed. By way of a non-limiting example, the transformation may consist in multiplying, in the cryptogram E(mi) = (c₁,c₂), the ci value by a factor k in order to change the part of the cryptogram related to the key. Thanks to the homomorphic encryption properties the cryptogram related to the Session Symmetric Key can be modified without the necessity to decrypt encrypted Session Symmetric Key.

According to one embodiment, the transformed encrypted Session Symmetric Key is sent to the at least one recipient.

According to one embodiment, a symmetric encryption scheme is provided to the at least one customer encrypted with the public key of the at least one customer, in order to encrypt the sensitive data required to be shared or stored within the at least one recipient by the at least one customer. According to one embodiment, the sensitive data required to be shared or stored are pseudo-anonymized. According to one embodiment, the symmetric encryption scheme is the Advanced Encryption Standard process, a symmetric block cipher, or the Triple Data Encryption Algorithm, a symmetric-key block chipper which applies the Data Encryption Standard cipher algorithm three times to each data block. By means of non-limiting example, the symmetric encryption scheme may be a Twofish algorithm, a Blowfish algorithm, a Serpent algorithm, International Data Encryption algorithm, CAST5 algorithm or a CAST6 algorithm.

According to one embodiment, a homomorphic decryption scheme is provided to the at least one recipient in order to decrypt the encrypted transformed Session Symmetric Key using the private keys in its possession. According to one embodiment, the homomorphic decryption scheme is based on a ElGamal algorithm or an Unpadded RSA algorithm.

According to one embodiment, a symmetric encryption scheme is provided to the at least one recipient in order to decrypt the encrypted sensitive data received with the use of the decrypted transformed Session Symmetric Key.

According to one embodiment, the Symmetric Session Keys generated are associated to an identification code. According to one embodiment, an index is associated to each center in the multicenter system, comprising the at least one customer and the at least one recipient, and another index is associated to each category of data. According to one embodiment, the identification code of the Session Symmetric Keys is obtained combining the index of the customer center and the index of the recipient center with the index associated to the data category. According to one embodiment, the identification code of the Session Symmetric Keys comprise an index associated to legal information concerning for example the contract related to the data sharing between the customer and the recipient. According to one embodiment, said identification code is a hexadecimal array where the first byte is the code of the costumer, the second byte the code of the recipient, the third byte refers to the purpose of processing and the fourth byte is the key index of the Session Symmetric Key. According to one embodiment, the identification code and associated contract may be stored in a distributed ledger or a blockchain.

According to one embodiment, the encrypted sensitive data are further received from the at least one customer and transmitted to the at least one recipient.

According to one embodiment, the encrypted sensitive data are transmitted with the identification code associated to the key to be used for the decryption of said encrypted sensitive data.

The present invention also relates to a system for protection of sensitive data storage and sharing in a multicentric system, the system being implemented within a customer and comprising a data processing system encompassing the means for carrying out steps corresponding to the related computer-implemented method according to anyone of the embodiments described hereabove.

The present invention further relates to a computer program product for protection of sensitive data storage and sharing in a multicentric system, the computer program product comprising instructions which, when the program is executed by a computer, cause the computer to carry out steps corresponding to the related computer-implemented method according to anyone of the embodiments described hereabove.

The present invention further relates to a computer-readable storage medium comprising instructions which, when the program is executed by a computer, cause the computer to carry out steps corresponding to the related computer-implemented method according to anyone of the embodiments described hereabove.

The present disclosure further relates to a system comprising a storage medium and means for carrying out multiple steps. According to one embodiment, the system according to the present disclosure uses a key generation service with the Master Key Pair, generated by the related computer implemented method, to generate a Key Pair, comprising a public key and a private key, which are then stored in the storage medium. According to one embodiment, the data processing system according to the present disclosure receives and stores in the storage medium the transformed encrypted Session Symmetric Key generated as described above with a homomorphic encryption scheme and the encrypted sensitive data.

According to one embodiment, the storage medium comprises public key, private key, the transformed encrypted Session Symmetric Key generated on-the-fly and the encrypted sensitive data obtained as described above. According to one embodiment, the storage medium is a secure storage medium such as a Hardware Security Module. According to one embodiment, the data processing system according to the present disclosure comprises the means for carrying out the step of decrypting the encrypted transformed Session Symmetric Key with a homomorphic decryption scheme using the private keys stored in the memory storage and decrypting the encrypted sensitive data using a symmetric encryption scheme with the decrypted transformed Session Symmetric Key. According to one embodiment, the data processing system comprises the means to carry out the steps of processing the sensitive data, encrypting the sensitive data with a predefined encryption scheme and storing the encrypted data into the storage medium. According to one embodiment, the predefined encryption scheme is selected by the customer between Advanced Encryption Standard-256 or the Triple Data Encryption Algorithm. According to one embodiment, the predefined encryption scheme is selected by the recipient between Advanced Encryption Standard-256 or the Triple Data Encryption Algorithm.

While various embodiments have been described and illustrated, the detailed description is not to be construed as being limited hereto. Various modifications can be made to the embodiments by those skilled in the art without departing from the scope of the disclosure as defined by the claims.

### BRIEF DESCRIPTION OF THE DRAWINGS

Figure 1 is a flow diagram illustrating the initialization steps corresponding to the method of the invention for the protection of sensitive data storage and sharing in a multicentric system.
**Figure 2** is a flow diagram illustrating an example of utilization of the present invention method to share pharmaceutical drug trial results between two entities: a customer and a recipient, being part of the multicentric system.

### REFERENCES

1 -Master Key Pair;
2 - Key Pairs;
3 - Symmetric Master Key;
4 - Derivation Master Key;
5 - Session Symmetric Key;
6 - Encrypted Session Symmetric Key;
7 - Encrypted transformed Session Symmetric Key;
8 - Decrypted transformed Session Symmetric Key;
   A - Generation of the at least one Session Symmetric Key;
   B - Encrypt the sensitive data to be shared using a symmetric encryption scheme;
   C - Encryption of the Session Symmetric keys using the homomorphic encryption scheme;
   D - Transform the value of the cryptogram in the Session Symmetric Keys;
   E - Session Symmetric Keys are decrypted using a homomorphic decryption scheme by the recipient;
   F - Decryption of the encrypted sensitive data using a symmetric decryption scheme and the related Session Symmetric Key.

### EXAMPLES

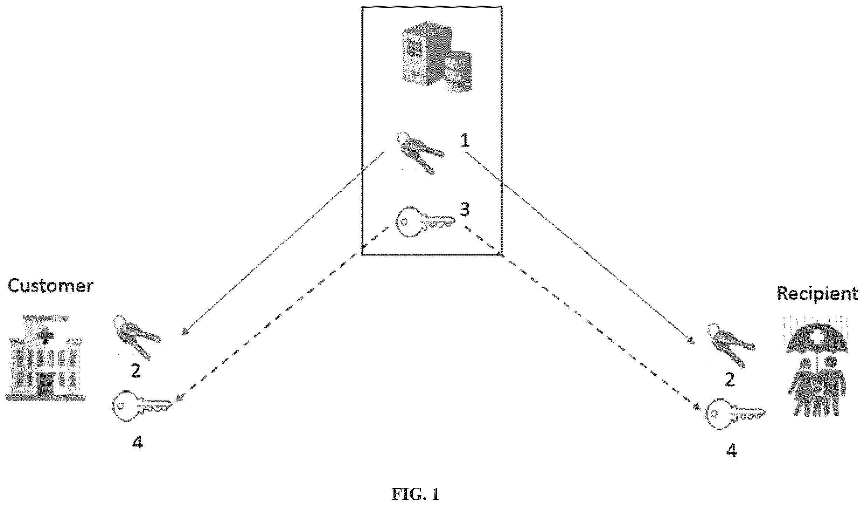

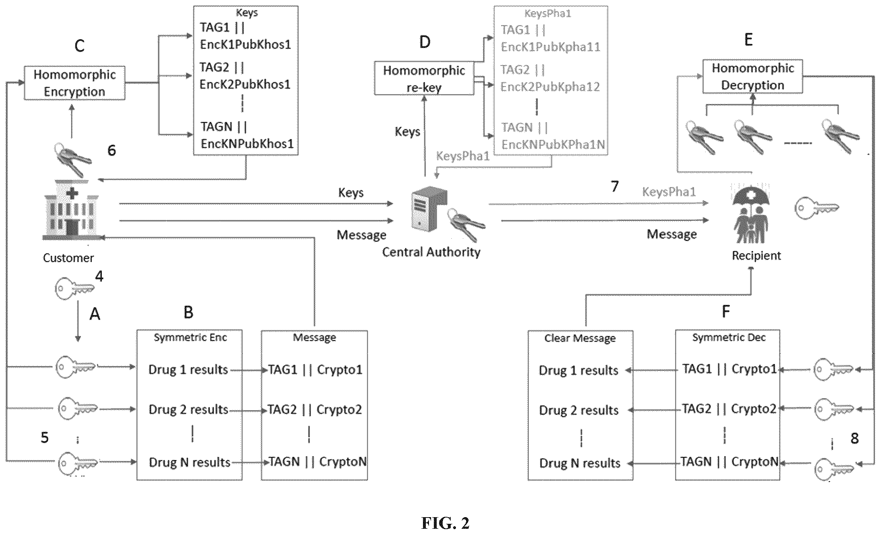

The present invention is further described with an example, illustrated in figures 1 and 2.

The latter example describes the process of sharing sensitive data concerning the results of three different pharmaceutical drug trails between the customer namely Hospital 1 and the recipient namely Pharmaceutical 1.

During an initialization step, both Hospital 1 and Pharmaceutical 1 generate a set of three Key Pairs 2 by using as seed the Master Key Pair 1 and receive a Derivation Master Key 4 generated using as seed the Symmetric Master Key 3 from a Central Authority implementing the related computer-implemented method described above. Once Hospital 1 and Pharmaceutical 1 are in possession of their asymmetric homomorphic keys and symmetric keys, they can start sharing sensitive data within the network.

After the initialization step, Hospital 1 can share information with Pharmaceutical 1 through the following steps presented below:
1. Hospital 1 generates three Session Symmetric Keys 5 to encrypt the sensitive data concerning the results of the Drug Trail 1, Drug Trail 2 and Drug Trail 3 (A, in Figure 2);
2. Hospital 1 generates the identification codes TAG1, TAG2 and TAG3, which link the customer (first byte of the TAG), recipient (second byte of the TAG), purpose (third byte of the TAG) and the legal restrictions (fourth byte of the TAG). Each byte is interpreted by a dictionary that maps the value with their respective meaning managed by the Central Authority, and stored in a ledger or blockchain;
3. Hospital 1 encrypt the Drug Trail Results 1, Drug Trail Results 2 and Drug Trail Results 3 using a symmetric encryption scheme and the Session Symmetric Key 1, Session Symmetric Key 2 and Session Symmetric Key 3, respectively. Then, the identification codes TAG1, TAG2 and TAG 3 are concatenated to their corresponding cryptogram, obtaining the final message to be sent (B, in Figure 2);
4. Hospital 1 encrypts the Session Symmetric Key 1, Session Symmetric Key 2 and Session Symmetric Key 3 using the homomorphic encryption scheme and its Public Key. Afterwards, TAG1, TAG2 and TAG 3 are concatenated to the encrypted Session Symmetric Key 1, Session Symmetric Key 2 and Session Symmetric Key 3, respectively (C, in Figure 2);
5. The encrypted Session Symmetric Keys 6 are sent to the Central Authority to transform the value of the cryptogram to decrypt the message according to the proper sensitive key of the Pharmaceutical 1 which is the recipient of the sensitive data. The process consists in multiplying the cryptogram within the Session Symmetric Key 1, Session Symmetric Key 2 and Session Symmetric Key 3, with proper factors *k₁, k₂* and *k₃*, respectively (D, in Figure 2);
6. The Central Authority sends the transformed encrypted Session Symmetric Keys 7 to the recipient Pharmaceutical 1;
7. Pharmaceutical 1 decrypts the cryptograms labeled with TAG1, TAG2 and TAG3, using a homomorphic decryption scheme and the Pharmaceutical Private Key 1, Pharmaceutical Private Key 2 and Pharmaceutical Private Key 3, respectively;
8. The decrypted transformed Session Symmetric Keys 8 are recovered by the recipient Pharmaceutical 1 (E, in Figure 2);
9. The encrypted sensitive data labeled with TAG1, TAG2 and TAG3 are decrypted using a symmetric decryption scheme and the decrypted transformed Session Symmetric Key 1, Session Symmetric Key 2 and Session Symmetric Key 3 (F, in Figure 2); and
10. The shared information is stored in the recipient facilities by encrypting again the sensitive data using its own key and symmetric encryption scheme.

## Claims

1. A computer-implemented method for the protection of sensitive data storage and sharing in a multicentric system, said method being executed by a customer in the multicentric system and comprising the steps of:
- receiving a key generation service to generate a Key Pair (2) of said customer, comprising a public key and a private key, said key generation service being obtained from a Master Key Pair (1) generated with an asymmetric encryption scheme;
- generating said Key Pair (2) of said customer using said key generation service;
- generating a Session Key (5) of said customer;
- encrypting said generated Session Key (5), using said public key of said customer and an asymmetric homomorphic encryption scheme, so that the encrypted Session Key (6) is modifiable without being decrypted;
- sending the encrypted Session Key (6) to a recipient within the multicentric system so as to share and/or store sensitive data within said recipient, said recipient possessing a Key Pair (2) comprising a public key and a private key and generated in said recipient from a key generation service obtained from said Master Key Pair (1), said sending to said recipient being effected via a Central Authority of said multicentric system adapted to transform the encrypted Session Key (6) without decrypting it before sending the transformed encrypted Session Key (7) to said recipient, so that the transformed encrypted Session Key (7) can be decrypted using said private key of said recipient.

2. The computer-implemented method according to claim **1,** wherein said method comprises:
- a preliminary step of sending a request to share and/or store said sensitive data within said recipient in the multicentric system;
- further steps of encrypting the sensitive data with said Session Key (5) of said customer and of transmitting said encrypted sensitive data to said recipient.

3. The computer-implemented method according to claim **1** or claim **2,** wherein said method comprises generating said Session Key (5) of said customer as a Session Symmetric Key.

4. The computer-implemented method according to claim **3,** wherein said method comprises:
- receiving a Derivation Master Key (4), generated with a Symmetric Master Key (3) and a symmetric encryption scheme associated with said Symmetric Master Key (3), said Symmetric Master Key (3) being generated with a symmetric encryption scheme, and comprising a limit of processing for the sensitive data which are requested to be shared and/or stored by said customer;
- generating said Session Symmetric Key (5) from said Derivation Master Key (4) with a symmetric encryption scheme associated with said Derivation Master Key (4).

5. The computer-implemented method according to claim **3** or **4,** further comprising the steps of:
- receiving a symmetric encryption scheme associated with said Session Symmetric Key (5);
- encrypting the sensitive data, required to be shared and/or stored within the recipient by the customer, with said Session Symmetric Key (5) and said received symmetric encryption scheme associated with said Session Symmetric Key (5).

6. The computer-implemented method according to any of claims **1** to **5,** wherein said method comprises encrypting said generated Session Key (5) using an ElGamal algorithm.

7. The computer-implemented method according to any of claims **1** to **5,** wherein said method comprises encrypting said generated Session Key (5) using an Unpadded RSA algorithm.

8. The computer-implemented method according to any of claims **1** to **5,** wherein said method comprises encrypting said generated Session Key (5) using an algorithm defined over an elliptic curve, chosen among the Curve 25519, Curve P-256 and Curve P-384 algorithms.

9. A system for protection of sensitive data storage and sharing in a multicentric system, the system being implemented within a customer and comprising a data processing system comprising means for carrying out the steps of the method according to any one of claims **1** to **8.**

10. A computer program product for protection of sensitive data storage and sharing in a multicentric system, the computer program product comprising instructions which, when the program is executed by a computer, cause the computer to carry out the steps of the method according to any one of claims **1** to **8.**

11. A computer-readable storage medium comprising instructions which, when the program is executed by a computer, cause the computer to carry out the steps of the method according to any one of claims **1** to **8.**

## Patentansprüche

1. Computerimplementiertes Verfahren zum Schutz der Speicherung und der gemeinsamen Nutzung sensibler Daten in einem multizentrischen System, wobei das Verfahren durch einen Kunden in dem multizentrischen System ausgeführt wird und die folgenden Schritte umfasst:
- Empfangen eines Schlüsselerzeugungsdienstes zum Erzeugen eines Schlüsselpaares (2) des Kunden, umfassend einen öffentlichen Schlüssel und einen privaten Schlüssel, wobei der Schlüsselerzeugungsdienst von einem Master-Schlüsselpaar (1) erhalten wird, das mit einem asymmetrischen Verschlüsselungsschema erzeugt wird;
- Erzeugen des Schlüsselpaares (2) des Kunden durch Verwenden des Schlüsselerzeugungsdienstes;
- Erzeugen eines Sitzungsschlüssels (5) des Kunden;
- Verschlüsseln des erzeugten Sitzungsschlüssels (5), Verwenden des öffentlichen Schlüssels des Kunden und eines asymmetrischen homomorphen Verschlüsselungsschemas, sodass der verschlüsselte Sitzungsschlüssel (6) veränderbar ist, ohne entschlüsselt zu werden;
- Senden des verschlüsselten Sitzungsschlüssels (6) an einen Empfänger innerhalb des multizentrischen Systems, um sensible Daten innerhalb des Empfängers gemeinsam zu nutzen und/oder zu speichern, wobei der Empfänger ein Schlüsselpaar (2) besitzt, das einen öffentlichen Schlüssel und einen privaten Schlüssel umfasst, und in dem Empfänger von einem Schlüsselerzeugungsdienst erzeugt wird, der von dem Master-Schlüsselpaar (1) erhalten wird, wobei das Senden an den Empfänger über eine zentrale Autorität des multizentrischen Systems durchgeführt wird, die angepasst ist, um den verschlüsselten Sitzungsschlüssel (6) umzuwandeln, ohne ihn vor dem Senden des umgewandelten verschlüsselten Sitzungsschlüssels (7) an den Empfänger zu entschlüsseln, sodass der umgewandelte verschlüsselte Sitzungsschlüssel (7) durch Verwenden des privaten Schlüssels des Empfängers entschlüsselt werden kann.

2. Computerimplementiertes Verfahren nach Anspruch 1, wobei das Verfahren umfasst:
- einen Vorbereitungsschritt des Sendens einer Anfrage zum gemeinsamen Nutzen und/oder Speichern der sensiblen Daten innerhalb des Empfängers in dem multizentrischen System;
- weitere Schritte des Verschlüsseins der sensiblen Daten mit dem Sitzungsschlüssel (5) des Kunden und des Übertragens der verschlüsselten sensiblen Daten an den Empfänger.

3. Computerimplementiertes Verfahren nach Anspruch 1 oder Anspruch 2, wobei das Verfahren Erzeugen des Sitzungsschlüssels (5) des Kunden als einen symmetrischen Sitzungsschlüssel umfasst.

4. Computerimplementiertes Verfahren nach Anspruch 3, wobei das Verfahren umfasst:
- Empfangen eines Ableitungsmasterschlüssels (4), der mit einem symmetrischen Master-Schlüssel (3) und einem symmetrischen Verschlüsselungsschema erzeugt wird, das dem symmetrischen Master-Schlüssel (3) zugeordnet ist, wobei der symmetrische Master-Schlüssel (3) mit einem symmetrischen Verschlüsselungsschema erzeugt wird, und eine Verarbeitungsbeschränkung für die sensiblen Daten umfasst, die angefragt sind, um durch den Kunden gemeinsam genutzt und/oder gespeichert zu werden;
- Erzeugen des symmetrischen Sitzungsschlüssels (5) aus dem Ableitungsmasterschlüssel (4) mit einem symmetrischen Verschlüsselungsschema, das dem Ableitungsmasterschlüssel (4) zugewiesen ist.

5. Computerimplementiertes Verfahren nach Anspruch 3 oder 4, weiter die folgenden Schritte umfassend:
- Empfangen eines symmetrischen Verschlüsselungsschemas, das dem symmetrischen Sitzungsschlüssel (5) zugewiesen ist;
- Verschlüsseln der sensiblen Daten, die angefragt sind, um durch den Kunden innerhalb des Empfängers gemeinsam genutzt und/oder gespeichert zu werden, mit dem symmetrischen Sitzungsschlüssel (5) und dem empfangenen symmetrischen Verschlüsselungsschema, das dem symmetrischen Sitzungsschlüssel (5) zugewiesen ist.

6. Computerimplementiertes Verfahren nach einem der Ansprüche 1 bis 5, wobei das Verfahren Verschlüsseln des erzeugten Sitzungsschlüssels (5) durch Verwenden eines ElGamal-Algorithmus umfasst.

7. Computerimplementiertes Verfahren nach einem der Ansprüche 1 bis 5, wobei das Verfahren Verschlüsseln des erzeugten Sitzungsschlüssels (5) durch Verwenden eines ungepolsterten RSA-Algorithmus umfasst.

8. Computerimplementiertes Verfahren nach einem der Ansprüche 1 bis 5, wobei das Verfahren Verschlüsseln des erzeugten Sitzungsschlüssels (5) durch Verwenden eines Algorithmus umfasst, der über eine elliptische Kurve definiert ist, der aus dem Kurve 25519-, Kurve P-256- und Kurve P-384-Algorithmus ausgewählt ist.

9. System zum Schutz der Speicherung und der gemeinsamen Nutzung sensibler Daten in einem multizentrischen System, wobei das System innerhalb eines Kunden implementiert wird und ein Datenverarbeitungssystem umfasst, das Mittel zum Ausführen der Schritte des Verfahrens nach einem der Ansprüche 1 bis 8 umfasst.

10. Computerprogrammprodukt zum Schutz der Speicherung und der gemeinsamen Nutzung sensibler Daten in einem multizentrischen System, wobei das Computerprogrammprodukt Anweisungen umfasst, die wenn das Programm durch einen Computer ausgeführt wird, bewirken, dass der Computer die Schritte des Verfahrens nach einem der Ansprüche 1 bis 8 ausführt.

11. Computerlesbares Speichermedium, das Anweisungen umfasst, die, wenn das Programm durch einen Computer ausgeführt wird, bewirken, dass der Computer die Schritte des Verfahrens nach einem der Ansprüche 1 bis 8 ausführt.

## Revendications

1. Procédé mis en œuvre par ordinateur pour la protection du partage et du stockage de données sensibles dans un système multicentrique; ledit procédé étant exécuté par un client dans le système multicentrique, ledit procédé comprenant les étapes de:
- Réception d'un service de génération de clé pour générer une paire de clés (2) dudit client, comprenant une clé publique et une clé privée, ledit service de génération de clé étant obtenu d'une paire de clés principale (1) générée avec un schéma de chiffrement asymétrique ;
- Génération de ladite paire de clés (2) dudit client en utilisant ledit service de génération de clé ;
- Génération d'une clé de session (5) dudit client ;
- Chiffrement de ladite clé de session (5) en utilisant ladite clé publique dudit client et un schéma de chiffrement homomorphe asymétrique, de sorte que la clé de session chiffrée (6) est modifiable sans être déchiffrée ;
- Envoyer la clé de session chiffrée (6) à un bénéficiaire dans le système multicentrique, de sorte à partager et/ou stocker des données sensibles chez ledit bénéficiaire, ledit bénéficiaire possédant une paire de clés (2) comprenant une clé publique et une clé privée et générée chez ledit bénéficiaire par un service de génération de clé obtenu de ladite paire de clés principale (1), ledit envoi au bénéficiaire étant effectué via une autorité centrale du système multicentrique adaptée pour transformer la clé de session chiffrée (6) sans la déchiffrer avant d'envoyer la clé de session chiffrée transformée (7) audit bénéficiaire, de sorte que la clé de session chiffrée transformée (7) peut être déchiffrée en utilisant la clé privée dudit bénéficiaire.

2. Procédé mis en œuvre par ordinateur selon la revendication **1,** dans lequel ledit procédé comprend :
- Une étape préliminaire d'envoi d'une requête pour partager et/ou stocker lesdites données sensibles chez ledit bénéficiaire dans le système multicentrique ;
- des étapes supplémentaires de chiffrement des données sensibles avec ladite clé de session (5) dudit client et de transmission desdites données sensibles chiffrées audit bénéficiaire.

3. Procédé mis en œuvre par ordinateur selon la revendication **1** ou la revendication **2,** dans lequel ledit procédé comprend la génération de ladite clé de session (5) dudit client en tant que clé de session symétrique.

4. Procédé mis en œuvre par ordinateur selon la revendication **3,** dans lequel ledit procédé comprend :
- La réception d'une clé principale de dérivation (4), générée avec une clé principale symétrique (3) et un schéma de chiffrement symétrique associé à ladite clé principale symétrique (3) ; ladite clé principale symétrique (3) étant générée par un schéma de chiffrement symétrique, et comprenant une limite de traitement pour les données sensibles dont le partage et/ou le stockage est demandé par ledit client ;
- La génération de ladite clé de session symétrique (5) à partir de ladite clé principale de dérivation (4) avec un schéma de chiffrement symétrique associé à ladite clé principale de dérivation (4).

5. Procédé mis en œuvre par ordinateur selon la revendication **3** ou **4,** comprenant en outre les étapes de :
- Réception d'un schéma de chiffrement symétrique associé à ladite clé de session symétrique (5) ;
- Chiffrement des données sensibles dont le partage et/ou le stockage est demandé par le client chez le bénéficiaire, avec ladite clé de session symétrique (5) et le schéma de chiffrement symétrique associé à ladite clé de session symétrique (5) reçu.

6. Procédé mis en œuvre par ordinateur selon l'une quelconque des revendications **1** à **5,** dans lequel ledit procédé comprend le chiffrement de ladite clé de session générée (5) en utilisant un algorithme ElGamal.

7. Procédé mis en œuvre par ordinateur selon l'une quelconque des revendications **1** à **5,** dans lequel ledit procédé comprend le chiffrement de ladite clé de session générée (5) en utilisant un algorithme RSA non rempli.

8. Procédé mis en œuvre par ordinateur selon l'une quelconque des revendications **1** à **5,** dans lequel ledit procédé comprend le chiffrement de ladite clé de session générée (5) en utilisant un algorithme défini sur une courbe elliptique, choisi parmi les algorithmes définis sur la courbe 25519, sur la courbe P-256 et sur la courbe P-384.

9. Système de protection du stockage et du partage de données sensibles dans un système multicentrique, le système étant mis en œuvre chez un client et comprenant un système de traitement de données comprenant des moyens pour mettre en œuvre les étapes du procédé selon l'une quelconque des revendications **1** à **8.**

10. Produit programme d'ordinateur pour la protection du stockage et du partage de données sensibles dans un système multicentrique, le produit programme d'ordinateur comprenant des instructions qui, lorsque le programme est exécuté par un ordinateur, amènent l'ordinateur à exécuter les étapes du procédé selon l'une quelconque des revendications **1** à **8.**

11. Support de stockage lisible par ordinateur comprenant des instructions qui, lorsque le programme est exécuté par un ordinateur, amènent l'ordinateur à exécuter les étapes du procédé selon l'une quelconque des revendications **1** à **8.**
